# DEMANDE DE BREVET EUROPEEN

(11) **EP 2 336 915 A1**
(43) Date de publication de la demande: **22.06.2011**
(21) Numéro de dépôt: 10194397.5
(22) Date de dépôt: 09.12.2010
(51) Int. Cl.: G06F 17/30, H04L 29/06

(54) **Procédé de gestion d'un contenu multimédia muni de références média**

(30) Priorité: 21.12.2009 FR 0959337
(71) Demandeur: Alcatel Lucent, 75007 Paris (FR)
(72) Inventeur: Baynaud, Erwan, 91620, NOZAY (FR); Squedin, Sylvain, 91620, NOZAY (FR); Obled, Corinne, 91620, NOZAY (FR); Delegue, Gérard, 91620, NOZAY (FR)
(74) Mandataire: Shamsaei Far, Hassan

(57) **Abrégé**

La présente invention concerne un procédé de gestion d'un contenu multimédia (100) muni de références média (102) permettant d'exécuter des applications dérivées dudit contenu multimédia (100), chacune desdites références média (102) étant associée à des paramètres métadata fournissant des informations relatives auxdites applications dérivées afin de permettre leurs mises en oeuvre dans un terminal (104) à l'aide d'un serveur distant (110), caractérisé en ce que, une référence média (102) étant activée par un utilisateur d'un terminal (104) reproduisant ledit contenu multimédia (100), il comprend les étapes suivantes:
- L'étape pour ledit terminal (100) de déterminer et d'informer (108) le serveur distant (110), d'une part, de ressources disponibles (106) pour exécuter une application dérivée dudit contenu multimédia et, d'autre part, d'un identifiant (115) de ladite référence média activée (102), et
- L'étape pour le serveur distant (110) d'effectuer, d'une part, une sélection d'applications compatibles avec lesdites ressources disponibles (106) du terminal (104) et, d'autre part, une sélection d'applications compatibles avec des paramètres métadata (120) associés à la référence média (102) identifiée.

## Description

La présente invention concerne un procédé de gestion d'un contenu multimédia muni de références média.

Il est connu d'associer à un contenu multimédia des références média, également dénommées « mediamark » en anglais, référençant un instant précis dans la reproduction de ce contenu multimédia et comprenant des informations associées.

A titre d'exemple, une vidéo relative à un concert peut contenir différentes références média - visant différents instants du concert - comprenant des informations relatives à, par exemple, un format de codage et/ou une durée de reproduction du contenu, une biographie d'un intervenant et/ou des applications dérivées de ce contenu comme l'accès à un site du réseau Internet d'un artiste ayant participé à ce concert et/ou offrant des produits dérivés du concert et/ou du chanteur.

A cet effet, chacune des références média requiert des informations spécifiques comme, selon les exemples précédents, ledit format de codage, ladite durée de reproduction, un script avec ladite bibliographie et/ou des adresses de sites Internet offrant lesdits produits dérivés.

De telles informations, dénommées par la suite paramètres métadata, peuvent être accessibles via les références média en différents instants de la reproduction du contenu multimédia de façon similaire à un marque-page multimédia, ou « bookmark » en anglais.

En fonction de la diversité des paramètres métadata associés à une référence média, c'est-à-dire de leur richesse, un utilisateur peut accéder à une diversité de ressources plus ou moins importante, cet accès étant généralement effectué au moyen d'un serveur distant traitant les paramètres métadata pour fournir des informations nécessaires audit accès.

La présente invention comprend la constatation que les références média, et leurs paramètres métadata associés, sont spécifiques aux différents types de terminal reproducteur de contenus média, notamment en fonction de leur fabricant.

De fait, l'offre accessible à un utilisateur est actuellement limité par la nature de son terminal reproducteur, ce qui limite également le développement de contenus multimédia munis de références média et la richesse des paramètres métadata.

Afin d'accroître le développement des références média dans les contenus multimédia et de pallier au manque d'interopérabilité de ces références, la présente invention concerne un procédé de gestion d'un contenu multimédia muni de références média permettant d'exécuter des applications dérivées dudit contenu multimédia, chacune desdites références média étant associée à des paramètres métadata fournissant des informations relatives auxdites applications dérivées afin de permettre leurs mises en oeuvre dans un terminal à l'aide d'un serveur distant, caractérisé en ce que, une référence média étant activée par un utilisateur d'un terminal reproduisant ledit contenu multimédia, il comprend les étapes suivantes:
- L'étape pour ledit terminal de déterminer et d'informer le serveur distant, d'une part, de ressources disponibles pour exécuter une application dérivée dudit contenu multimédia et, d'autre part, d'un identifiant de ladite référence média activée, et
- L'étape pour le serveur distant d'effectuer, d'une part, une sélection d'applications compatibles avec lesdites ressources disponibles du terminal et, d'autre part, une sélection d'applications compatibles avec des paramètres métadata associés à la référence média identifiée,

De telle sorte que le terminal active une ou plusieurs applications compatibles avec lesdites ressources disponibles du terminal et avec les paramètres métadata de la référence média activée.

Grâce à l'invention, différentes terminaux peuvent mettre en oeuvre des références média, et des applications dérivées, d'un même contenu multimédia indépendamment de leurs fabricants.

De fait, l'invention permet à un terminal, indépendamment de son fabriquant, d'avoir accès aux applications d'une référence média pour lesquelles ses ressources disponibles sont suffisantes et pour lesquelles les paramètres métadata nécessaires sont connus.

En outre l'invention met en oeuvre un serveur distant effectuant une partie des étapes nécessaires à sa mise en oeuvre ce qui permet ainsi de s'affranchir des spécificités des fabricants de terminaux pour mettre en oeuvre des références média de contenus multimédia.

Par ailleurs, l'utilisation d'un serveur distant permet de requérir des moyens moindres de traitement et de mémorisation de données au niveau du terminal, notamment lorsque les paramètres métadata sont mémorisés dans une base distante dudit serveur. Dans ce cas, il est relativement simple d'enrichir cette base de données sans accroître la complexité, la charge de travail ou le coût des terminaux.

Dans une réalisation, le procédé comprend l'étape pour le terminal de déclencher automatiquement la détermination et l'information du serveur distant, desdites ressources disponibles du terminal et dudit identifiant de la référence média activée lorsque l'utilisateur requiert une activation de ladite référence média.

Selon une réalisation, le procédé comprend l'étape supplémentaire pour le terminal de déterminer les applications communes aux deux sélections d'applications compatibles avec les ressources disponibles du terminal et des applications compatibles avec des paramètres métadata associés à la référence média identifiée.

Selon une réalisation, le procédé comprend l'étape, pour le serveur distant, de déterminer les paramètres métadata associés à l'identifiant de la référence média activée transmis par le terminal à partir d'une base de paramètres métadata distante du terminal.

Selon une réalisation, le terminal mémorise un historique des applications activées en fonction d'au moins un des paramètres suivant: une identité de l'utilisateur requérant l'activation, une identité du contenu multimédia reproduit, des priorités prédéterminées d'applications préférées, une référence activée, une localisation du terminal, une date de l'activation.

Selon une réalisation, le terminal transmet l'historique des applications au serveur distant afin que ce dernier détermine un historique des applications mises en oeuvre par différents terminaux.

Selon une réalisation, les paramètres métadata sont des données codées commandant un programme visant, en particulier, à accéder à une page de présentation d'offre de services.

L'invention concerne également un terminal de reproduction d'un contenu multimédia muni de références média permettant d'exécuter des applications dérivées desdits contenus multimédia, chacune desdites références média étant associée à des paramètres métadata fournissant des informations relatives auxdites applications dérivées afin de permettre leurs mises en oeuvre dans un terminal à l'aide d'un serveur distant, caractérisé en ce que, une référence média étant activée par un utilisateur du terminal reproduisant ledit contenu multimédia, il comprend:
- Des moyens pour déterminer et informer un serveur distant, d'une part, de ressources disponibles pour exécuter une application dérivée dudit contenu multimédia et, d'autre part, d'un identifiant de ladite référence média activée,
- Des moyens pour recevoir dudit serveur distant, d'une part, une sélection d'applications compatibles avec lesdites ressources disponibles du terminal et, d'autre part, une sélection d'applications compatibles avec des paramètres métadata associés à la référence média identifiée,

De telle sorte que le terminal puisse activer une ou plusieurs applications compatibles avec ses ressources et avec les paramètres métadata de la référence média activée afin de mettre en oeuvre un procédé conforme à l'une des réalisations précédentes.

Dans une réalisation, le terminal se présente sous la forme d'au moins un des dispositifs suivants : un ordinateur, un téléviseur, un téléphone portable, un PDA pour « personal Digital Assistant » en anglais, un boîtier de connexion à Internet.

L'invention concerne également un serveur de gestion d'un contenu multimédia muni de références média permettant d'exécuter des applications dérivées dudit contenu multimédia, chacune desdites références média étant associée à des paramètres métadata fournissant des informations relatives auxdites applications dérivées afin de permettre leurs mises en oeuvre dans un terminal à l'aide d'un serveur distant, caractérisé en ce que, une référence média étant activée par un utilisateur d'un terminal reproduisant ledit contenu multimédia, il comprend:
- Des moyens pour recevoir dudit terminal, d'une part, une détermination de ressources disponibles dans ledit terminal pour exécuter une application dérivée dudit contenu multimédia et, d'autre part, un identifiant de ladite référence média activée, et
- Des moyens pour transmettre audit terminal, d'une part, une sélection d'applications compatibles avec lesdites ressources disponibles du terminal et, d'autre part, une sélection d'applications compatibles avec des paramètres métadata associés à la référence média identifiée,

De telle sorte que le terminal puisse activer une ou plusieurs applications compatibles avec lesdites ressources disponibles du terminal et avec les paramètres métadata de la référence média activée afin de mettre en oeuvre un procédé conforme à l'une des réalisations précédentes.

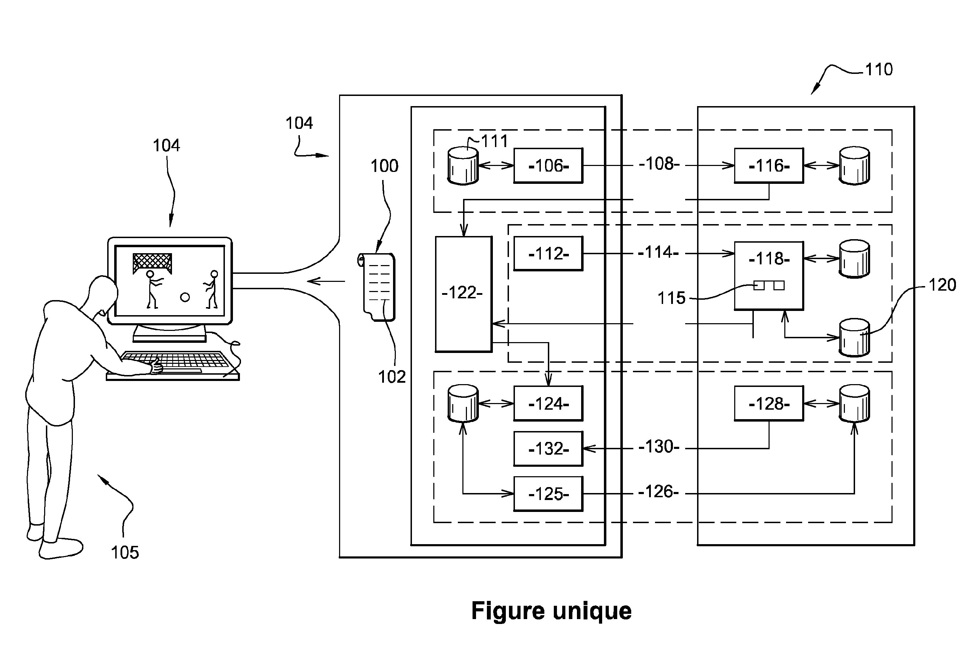

D'autres caractéristiques et avantages de l'invention apparaîtront à la lumière de la description ci-dessous, effectuée à titre illustrative et non limitatif, en référence à l'unique figure ci-jointe sur laquelle est représentée de façon schématique un procédé mettant en oeuvre une réalisation de l'invention.

Sur cette figure est représenté schématiquement un procédé de gestion d'un contenu multimédia 100 muni de références média 102 permettant d'exécuter des applications dérivées dudit contenu multimédia 100.

A titre d'exemple, un tel contenu multimédia 100 est un programme vidéo et les références média sont des informations relatives à la reproduction du contenu multimédia ― support de reproduction compatible, durée de reproduction totale, durée de reproduction déjà effectuée ― et aux informations présentées par le contenu - personnes ou éléments apparaissant lors de la reproduction du contenu.

Par exemple, en considérant un contenu multimédia relatif à un tournoi de football, les références média peuvent être destinées à fournir des informations sur le lieu du tournoi, son historique, et/ou à permettre l'acquisition de produits dérivés d'une des équipes.

Selon cet exemple, des applications dérivées d'un tel contenu multimédia peuvent être des programmes du type Amazone™ ou Ebay™ visant à permettre l'acquisition, via le réseau Internet, des maillots des équipes présentes dans le tournoi.

A cet effet, chacune desdites références média 102 est associée à des paramètres métadata fournissant des informations relatives auxdites applications dérivées comme, selon les exemples précédentes, l'adresse des sites Web à consulter d'Amazone ― www.amazone.com - ou d'Ebay ― www.ebay.com.

Ces paramètres métadata comprennent également des logiciels commandant l'accès à ces sites Web ― ou « tags » en anglais- et des mots clefs indiquant l'identité de l'équipe pour laquelle l'application doit être exécutée.

Afin de permettre cette mise en oeuvre d'une telle application via un terminal 104 reproduisant ledit contenu multimédia 100, un utilisateur 105 peut activer une référence média 102 pour commander les étapes suivantes:
- Pour ledit terminal 104, l'étape 106 de déterminer et l'étape 108 de transmettre à un serveur distant 110 une indication de ressources 111 disponibles dans le terminal 104 pour exécuter l'application dérivée associée à la référence média activée.

Parallèlement, le terminal 104 effectue l'étape 112 de déterminer et l'étape 114 de transmettre un identifiant 115 de ladite référence média en cours d'activation au serveur distant 110.

Dans cette réalisation, le terminal déclenche automatiquement ces déterminations 106 et 112 et ces transmissions 108 et 114, vers le serveur distant 110, lorsque l'utilisateur requiert l'activation d'une référence média 102.
- Pour le serveur distant 110, l'étape d'effectuer une sélection 116 d'applications compatibles avec lesdites ressources 111 disponibles du terminal et, d'autre part, l'étape 118 d'effectuer une sélection d'applications compatibles avec des paramètres métadata 120 associés à la référence média correspondant à l'identifiant 115.

Dans cette réalisation le serveur distant 110 détermine les paramètres métadata 120 associés à l'identifiant 115 applicatif transmis par le terminal à partir d'une base de paramètres métadata distante du terminal.

Ainsi, le terminal 104 peut commander une ou plusieurs applications compatibles avec ses ressources 111 et avec les paramètres métadata 120 de la référence média 102 activée.

De fait, le terminal 104 peut effectuer l'étape 122 de déterminer les applications communes aux deux sélections, ces applications étant compatibles avec les ressources 111 du terminal et les métadata disponibles pouvant alors être activées par le terminal.

Dans d'autres variantes de l'invention, il est possible que cette étape 122 puisse être effectuée en dehors du terminal 104, par exemple au niveau du serveur distant 110.

La présente invention est susceptible de nombreuses variantes. Par exemple, il est possible que le terminal 104 garde en mémoire ― étape 124 - un historique des applications effectivement activées par l'utilisateur afin d'établir un classement des applications en fonction de leur fréquence d'activation.

Par exemple, un tel classement peut être effectué sur la base d'au moins un des paramètres suivant: une identité de l'utilisateur requérant l'activation, le contenu multimédia reproduit, des priorités prédéterminées d'applications préférées, la référence média activée, la localisation du terminal, une date de l'activation.

Dans ce cas, le terminal 104 peut mémoriser ― étape 125 ― puis transmettre ― étape 126 ― cet historique et/ou ce classement d'applications activées au serveur distant 110 afin que ce dernier détermine un historique et/ou un classement 128 des applications activées commun à différents terminaux.

Dès lors, un tel historique et/ou un classement 128 commun peut être transmis ― étape 130 ― au terminal afin que ce dernier dispose de cet historique et/ou de ce classement commun dans une mémoire dédiée 132.

A la lumière de la description effectuée ci-dessus, il apparaît que les paramètres métadata sont des données codées commandant, par exemple, un programme visant à accéder à une page de présentation d'offre de services disponible via un réseau tel que le réseau Internet ou tel qu'un réseau de téléphonie cellulaire.

Par ailleurs, le terminal 104 se présente, dans la figure jointe, comme un ordinateur mais il peut s'agir de tout terminal pouvant reproduire un contenu multimédia et d'y activer une référence média, comme un des dispositifs suivants : un téléviseur, un téléphone portable, un PDA pour « personal Digital Assistant » en anglais, un boîtier de connexion à Internet.

## Revendications

1. Procédé de gestion d'un contenu multimédia (100) muni de références média (102) permettant d'exécuter des applications dérivées dudit contenu multimédia (100), chacune desdites références média (102) étant associée à des paramètres métadata fournissant des informations relatives auxdites applications dérivées afin de permettre leurs mises en oeuvre dans un terminal (104) à l'aide d'un serveur distant (110), **caractérisé en ce que**, une référence média (102) étant activée par un utilisateur d'un terminal (104) reproduisant ledit contenu multimédia (100), il comprend les étapes suivantes:
- L'étape pour ledit terminal (100) de déterminer et d'informer (108) le serveur distant (110), d'une part, de ressources disponibles (106) pour exécuter une application dérivée dudit contenu multimédia et, d'autre part, d'un identifiant (115) de ladite référence média activée (102), et
- L'étape pour le serveur distant (110) d'effectuer, d'une part, une sélection d'applications compatibles avec lesdites ressources disponibles (106) du terminal (104) et, d'autre part, une sélection d'applications compatibles avec des paramètres métadata (120) associés à la référence média (102) identifiée,
De telle sorte que le terminal (104) active une ou plusieurs applications compatibles avec lesdites ressources disponibles (106) du terminal (104) et avec les paramètres métadata (120) de la référence média (102) activée.

2. Procédé selon la revendication 1 **caractérisé en ce qu'**il comprend l'étape pour le terminal (104) de déclencher automatiquement la détermination, et l'information du serveur distant (110), desdites ressources disponibles (106) du terminal (104) et dudit identifiant (115) de la référence média activée (102) lorsque l'utilisateur requiert une activation de ladite référence média.

3. Procédé selon la revendication 2 **caractérisé en ce qu'**il comprend l'étape (122) supplémentaire pour le terminal (104) de déterminer les applications communes aux deux sélections d'applications compatibles avec les ressources disponibles (106) du terminal et des applications compatibles avec des paramètres métadata (120) associés à la référence média identifiée (102).

4. Procédé selon l'une des revendications précédentes **caractérisé en ce qu'**il comprend l'étape, pour le serveur distant (110), de déterminer les paramètres métadata (120) associés à l'identifiant (115) de la référence média activée transmis par le terminal (104) à partir d'une base de paramètres métadata distante du terminal (104).

5. Procédé selon l'une des revendications précédentes **caractérisé en ce que** le terminal (104) mémorise un historique (124, 125) des applications activées en fonction d'au moins un des paramètres suivant: une identité de l'utilisateur requérant l'activation, une identité du contenu multimédia reproduit, des priorités prédéterminées d'applications préférées, une référence activée, une localisation du terminal, une date de l'activation.

6. Procédé selon la revendication 5 **caractérisé en ce que** le terminal (104) transmet l'historique (124) des applications au serveur distant (110) afin que ce dernier détermine un historique (125) des applications mises en oeuvre par différents terminaux.

7. Procédé selon l'une des revendications précédentes **caractérisé en ce que** les paramètres métadata (120) sont des données codées commandant un programme visant, en particulier, à accéder à une page de présentation d'offre de services.

8. Terminal (104) de reproduction d'un contenu multimédia muni de références média permettant d'exécuter des applications dérivées desdits contenus multimédia, chacune desdites références média étant associée à des paramètres métadata fournissant des informations relatives auxdites applications dérivées afin de permettre leurs mises en oeuvre dans un terminal (104) à l'aide d'un serveur distant, **caractérisé en ce que**, une référence média étant activée par un utilisateur du terminal (104) reproduisant ledit contenu multimédia, il comprend:
- Des moyens pour déterminer et informer un serveur distant, d'une part, de ressources disponibles pour exécuter une application dérivée dudit contenu multimédia et, d'autre part, d'un identifiant de ladite référence média activée, et
- Des moyens pour recevoir dudit serveur distant, d'une part, une sélection d'applications compatibles avec lesdites ressources disponibles du terminal et, d'autre part, une sélection d'applications compatibles avec des paramètres métadata associés à la référence média identifiée,
De telle sorte que le terminal (104) puisse activer une ou plusieurs applications compatibles avec ses ressources et avec les paramètres métadata de la référence média activée afin de mettre en oeuvre un procédé conforme à l'une des revendications précédentes.

9. Terminal (104) selon la revendication 8 **caractérisé en ce qu'**il se présente sous la forme d'au moins un des dispositifs suivants : un ordinateur, un téléviseur, un téléphone portable, un PDA pour « personal Digital Assistant » en anglais, un boîtier de connexion à Internet.

10. Serveur de gestion d'un contenu multimédia muni de références média permettant d'exécuter des applications dérivées dudit contenu multimédia, chacune desdites références média étant associée à des paramètres métadata fournissant des informations relatives auxdites applications dérivées afin de permettre leurs mises en oeuvre dans un terminal (104) à l'aide d'un serveur distant, **caractérisé en ce que**, une référence média étant activée par un utilisateur d'un terminal (104) reproduisant ledit contenu multimédia, il comprend:
- Des moyens pour recevoir dudit terminal, d'une part, une détermination de ressources disponibles dans ledit terminal pour exécuter une application dérivée dudit contenu multimédia et, d'autre part, un identifiant de ladite référence média activée, et
- Des moyens pour transmettre audit terminal, d'une part, une sélection d'applications compatibles avec lesdites ressources disponibles du terminal et, d'autre part, une sélection d'applications compatibles avec des paramètres métadata associés à la référence média identifiée,
De telle sorte que le terminal puisse activer une ou plusieurs applications compatibles avec lesdites ressources disponibles du terminal et avec les paramètres métadata de la référence média activée afin de mettre en oeuvre un procédé conforme à l'une des revendications précédentes 1 à 7.
